# EUROPÄISCHE PATENTSCHRIFT

(11) **EP 2 412 229 B1**
(45) Veröffentlichungstag und Bekanntmachung des Hinweises auf die Patenterteilung: **11.09.2013**
(21) Anmeldenummer: 11008202.1
(22) Anmeldetag: 27.01.2010
(51) Int. Cl.: A01D 69/02

(54) **Landwirtschaftliches Anbaugerät**
Agricultural device
Machine agricole

(30) Priorität: 19.02.2009 DE 102009009628
(43) Veröffentlichungstag der Anmeldung: 01.02.2012
(62) Teilanmeldung aus: 10000829.1
(73) Patentinhaber: Alois Pöttinger Maschinenfabrik Ges.m.b.H., 4710 Grieskirchen (AT)
(72) Erfinder: Pöttinger, Klaus, 4710 Grieskirchen (AT); Schremmer, Wolfgang, 4062 Thening (AT); Baldinger, Markus, 4084 St. Agatha (AT)
(74) Vertreter: Thoma, Michael

(56) Entgegenhaltungen:
- EP-A1- 1 174 019
- EP-A1- 1 731 014
- EP-A2- 1 432 104
- DE-A1- 2 141 706
- DE-U1- 8 706 001
- GB-A- 2 332 132
- US-A- 3 873 032
- US-A1- 2008 264 028

## Beschreibung

Die vorliegende Erfindung betrifft ein landwirtschaftliches Anbaugerät in Form eines Ladewagens zum Anbau an einen Schlepper, mit einer Pickup mit einer Stachelwalze zur Aufnahme von Erntegut vom Boden und einem Förderrotor zur Weiterförderung des von der Pickup aufgenommenen Ernteguts, wobei der Arbeitskorpus der Stachelwalze und der Arbeitskorpus des Förderrotors jeweils von einem Antrieb rotatorisch antreibbar ist. Ein solcher Ladewagen ist aus der DE 87 06001 U bekannt.

Bei landwirtschaftlichen Anbaugeräten wie beispielsweise einem Ladewagen, werden die Arbeitsaggregate, die die landwirtschaftlichen Funktionen des jeweiligen Arbeitsgeräts ausführen, üblicherweise durch einen mechanischen Antrieb angetrieben, der über eine Gelenkwelle von der Zapfwelle des Schleppers her gespeist wird. Derartige landwirtschaftliche Funktionen sind beispielsweise die Erntegutbearbeitung, was im Falle eines Ladewagens die Aufnahme des Ernteguts vom Boden durch eine Pickup-Stachelwalze, die Förderung des aufgenommenen Ernteguts in einen Erntegutspeicher mittels eines Förderrotors und auch das Abladen des Ernteguts mittels Dosierwalzen umfasst. Bei entsprechend anderen Anbaugeräten sind entsprechend andere landwirtschaftliche Funktionen auszuführen, wobei mit "landwirtschaftliche Funktionen" insbesondere die Kernaufgaben des jeweiligen Anbaugeräts gemeint sind.

Derartige mechanische Antriebe von der Zapfwelle des Schleppers her erfordern je nach Position des jeweiligen Arbeitsaggregats nicht nur die lange Gelenkwelle, die zum Schlepper führt, sondern auch diverse Verzweigungswellen und Umlenkgetriebe, um den Antriebsstrang zum jeweiligen Arbeitsaggregat zu führen. Dies kann zum Teil sehr aufwändig sein und bringt regelmäßig eine nicht unbedeutende Gewichtserhöhung mit sich. Ein anderes Problem solcher mechanischen Antriebe ist die nur begrenzt mögliche Änderung der Antriebsgeschwindigkeit, die im Wesentlichen nur über eine Drehzahländerung der Zapfwelle des Schleppers bewirkt werden kann. Eine relative Änderung der Antriebsgeschwindigkeiten verschiedener Arbeitsaggregate dahingehend, dass ein Arbeitsaggregat schneller und ein anderes langsamer gestellt wird, ist regelmäßig nicht möglich bzw. erfordert den Einbau aufwändiger, hinsichtlich ihrer Untersetzung bzw. Übersetzung variabler Getriebe.

Es wurde daher bereits vorgeschlagen, die genannten Arbeitsaggregate hydraulisch anzutreiben. Hierbei werden an dem jeweiligen Arbeitsaggregat Stellantriebe beispielsweise in Form von Hydromotoren vorgesehen, zu denen nur relativ einfach zu verlegende Hydraulikdruckleitungen zu führen sind. Die Hydraulikantriebe sind jedoch nicht billig und bei auftretenden Leckagen nicht unkritisch bezüglich der Reinhaltung von Boden und Erntegut. Vor allen Dingen haben hydraulische Antriebe jedoch einen schlechten Wirkungsgrad und sind eher schlecht regelbar.

Es wurde daher bereits auch vorgeschlagen, am Anbaugerät elektrisch arbeitende Antriebe vorzusehen, um die die jeweilige landwirtschaftliche Arbeitsfunktion ausführenden Arbeitsaggregate anzutreiben. Beispielsweise beschreibt die DE 10 2007 024 644 A1 ein System umfassend einen Schlepper und ein landwirtschaftliches Anbaugerät, bei dem am Anbaugerät eine elektrische Last zum Ausführen einer landwirtschaftlichen Funktion vorgesehen sein soll, die über eine elektrische Schnittstelle zwischen Schlepper und Anbaugerät mit elektrischer Energie gespeist wird. Das Anbaugerät soll hierbei frei von eigener Leistungselektronik ausgebildet sein; die Leistungselektronik wird schlepperseitig vorgesehen. In ähnlicher Weise beschreibt die DE 10 2007 024 645 A1 ein elektrisches Anbaugerät mit einem Elektroantrieb, der vom Schlepper her mit Strom versorgt wird. Die DE 10 2005 019 362 A1 beschreibt die nähere Ausgestaltung einer elektrischen Schnittstelle zum Übertragen elektrischer Energie zwischen einem Schlepper und einem daran ankoppelbaren landwirtschaftlichen Arbeitsgerät. Die DE 103 03 050 A1 schlägt zur Versorgung eines Anbaugeräts mit ausreichend elektrischer Energie vor, an die Zapfwelle des Schleppers einen Generator zu koppeln, der elektrische Lasten des Traktors und auch eines landwirtschaftlichen Anbaugeräts mit einer Generatorspannung antreibt, die deutlich über der üblichen 12 Volt-Bordnetzspannung von Schleppern liegt.

Aus der Schrift US 2008/0264028 A1 ist eine Ballenpresse bekannt, bei der die Stachelwalze der Pickup über einen Kettentrieb mit dem daran anschließenden Förderrotor gekoppelt ist, welcher Rotor durch einen Hydraulikmotor oder einen Elektromotor antreibbar sein soll, um die Drehrichtung umkehren und Verstopfungen beseitigen zu können.

Derartige elektrische Antriebe haben sich in der Praxis allerdings bislang nicht durchsetzen können. Dies liegt einerseits daran, dass die Arbeitsaggregate, die die landwirtschaftliche Funktion des jeweiligen Anbaugeräts ausführen, regelmäßig großdimensioniert sind und daher große Antriebsleistungen benötigen, so dass die entsprechenden elektrischen Antriebe ebenfalls groß zu dimensionieren sind, was entsprechenden Bauraum im Bereich des Arbeitsaggregats verschlingt. Zudem ist der vom Wirkungsgrad her günstige Drehzahlbereich eines Elektromotors oftmals nicht ohne weiteres mit der für das Arbeitsaggregat erforderlichen Drehzahl kompatibel. Vor allem aber widerstehen die vergleichsweise empfindlichen Elektroantriebe nicht ohne weiteres dem rauen Betrieb an landwirtschaftlichen Arbeitsaggregaten, die oftmals harten Schlägen durch Steine oder dergleichen, Feuchte, Staub und Verkrustungen durch Erdreich und dergleichen ausgesetzt sind.

Der vorliegenden Erfindung liegt die Aufgabe zugrunde, einen verbesserten Ladewagen der genannten Art zu schaffen, der Nachteile des Standes der Technik vermeidet und Letzteren in vorteilhafter Weise weiterbildet. Es soll für die Stachelwalze und den Förderrotor des Ladewagens ein leicht zu steuernder und mit Energie zu versorgender Antrieb geschaffen werden, der bei leichter Bauweise ohne zusätzlichen Platzbedarf dem harten Betrieb an dem Förderrotor und Pickup gewachsen ist und die Pickup-Stachelwalze und den Förderrotor einfach steuern kann.

Erfindungsgemäß wird diese Aufgabe durch einen Ladewagen gemäß Anspruch 1 gelöst. Bevorzugte Ausgestaltungen der Erfindung sind Gegenstand der abhängigen Ansprüche.

Es wird also vorgeschlagen, den Antrieb der Stachelwalze und des Förderrotors des Anbaugeräts elektrisch auszubilden und in den Arbeitskorpus des Arbeitsaggregats zu integrieren, so dass der im Innenraum des Arbeitskorpus befindliche Platz ausgenutzt und der Elektromotor von dem genannten Arbeitskorpus gehäuseartig umgeben wird. Erfindungsgemäß besitzt der Antrieb zum rotatorischen Antreiben der Stachelwalze einen Elektromotor, der im Inneren des Arbeitskorpus der Stachelwalze aufgenommen ist, und der Antrieb des nachgeordneten Förderrotors einen Elektromotor, der im Inneren des Arbeitskorpus des Förderrotors angeordnet ist. Hierdurch können die Vorteile eines elektrischen Antriebs genutzt, dessen Nachteile jedoch vermieden werden. Es wird eine einfache Steuerung der Antriebsgeschwindigkeiten bei einfacher Energieversorgung erreicht. Gleichzeitig wird die Anfälligkeit des Elektromotors gegenüber dem harten Betrieb an dem landwirtschaftlichen Arbeitsaggregat beseitigt, da der Elektromotor vom Arbeitskorpus selbst geschützt wird. Gleichzeitig wird der Innenraum des meist großdimensioniert auszulegenden Arbeitskorpus genutzt, so dass kein zusätzlicher Bauraum benötigt wird.

Der Arbeitskorpus, in dem der Elektromotor integriert ist, ist grundsätzlich an die jeweilige landwirtschaftliche Funktion, die von dem Arbeitskorpus ausgeführt wird, angepasst, so dass der Arbeitskorpus grundsätzlich verschieden ausgebildet sein kann. Je nach landwirtschaftlicher Funktion kann der Arbeitskorpus unterschiedliche Formgebungen besitzen. Besonders vorteilhaft ist das Vorsehen eines elektrischen Antriebs im Inneren des Arbeitskorpus dabei dann, wenn der Arbeitskorpus einen länglichen Hohlkörper beispielsweise in Form eines Strangprofils mit gleich bleibendem Querschnitt besitzt, das den Elektromotor umfangsseitig umschließt. Typischerweise kann die Länge des Arbeitskorpus ein Vielfaches seines Durchmessers betragen, beispielsweise mehr als fünf mal so groß als der Durchmesser sein. Wie gesagt ist die Formgebung des Arbeitskorpus jedoch in Abhängigkeit der wahrzunehmenden landwirtschaftlichen Funktion grundsätzlich verschieden.

Insbesondere kann der Elektromotor in einen länglichen Hohlkörper in Form eines Rohres oder einer Walze integriert sein.

In Weiterbildung der Erfindung bildet der Arbeitskorpus des Arbeitsaggregats, in den der Elektromotor ingetriert ist, ein Gehäuse für den Elektromotor, das den genannten Elektromotor zumindest umfangsseitig vorzugsweise vollständig umschließt. Der Elektromotor kann hierbei grundsätzlich ein eigenes Motorgehäuse aufweisen, das dann von dem Arbeitskorpus nach Art einer zweiten Haut bzw. eines Außenmantels umgeben wird. Hierdurch können Standardmotoren Verwendung finden, die in einfacher Weise in den Innenraum des Arbeitskorpus eingebaut werden.

Alternativ kann jedoch auch vorgesehen sein, dass der Elektromotor selbst ohne eigenes Motorgehäuse ausgebildet ist und der den Elektromotor umgebende Arbeitskorpus das in diesem Fall dann einzige Gehäuse des Elektromotors bildet. Hierdurch kann eine besonders klein bauende Ausführung erzielt werden bzw. kann umgekehrt der im Arbeitskorpus zur Verfügung stehende Bauraum vollständig ausgenutzt werden und ein von der Leistung her größtmöglicher Elektromotor eingebaut werden. Zudem wird eine Gewichtsersparnis erzielt, da auf ein separates Motorgehäuse verzichtet wird.

Um auch mit leistungsschwächeren Elektromotoren arbeiten zu können und/oder die regelmäßig sehr hohe Elektromotordrehzahl auf die notwendige Antriebsdrehzahl für den Arbeitskorpus zu untersetzen, kann in Weiterbildung der Erfindung dem Elektromotor ein Getriebe zugeordnet sein, das vorteilhafterweise ebenfalls im Inneren des Arbeitskorpus aufgenommen ist. Die aus dem Elektromotor und dem diesem zugeordneten Getriebe bestehende Baugruppe ist hierbei vollständig in den Innenraum des Arbeitskorpus integriert.

Das Getriebe kann hierbei grundsätzlich verschieden ausgebildet sein und an den zur Verfügung stehenden Innenraum des Arbeitskorpus des Arbeitsgeräts angepasst sein. In Weiterbildung der Erfindung kann insbesondere ein Planetengetriebe Verwendung finden, das auf kleinem Bauraum große Untersetzungen bzw. Übersetzungen zulässt und daher gut in den Arbeitskorpus auch bei kleinerem Durchmesser des Arbeitskorpus zu integrieren ist.

Das in den Arbeitskorpus integrierte Getriebe kann hierbei grundsätzlich ähnlich wie der Elektromotor ein eigenes Gehäuse besitzen und/oder als separate Baugruppe ausgebildet sein, die in standardmäßiger Ausbildung in den Innenraum des Arbeitskorpus gesetzt wird, so dass der Arbeitskorpus lediglich eine separate Außenhaut bildet, die das Getriebe umschließt. Alternativ hierzu kann jedoch auch bezüglich des Getriebes vorgesehen sein, dass der Arbeitskorpus einen Teil des Getriebes bildet und/oder das Getriebe funktional in den Arbeitskorpus integriert ist. Beispielsweise kann eine Innenmantelfläche des Arbeitskorpus eine Getrieberadlauffläche bilden und/oder eine Verzahnung aufweisen, die mit einem Getrieberad des Getriebes kämmt. Ist beispielsweise das Getriebe als Planetengetriebe ausgebildet, kann die Innenmantelfläche des Arbeitskorpus als Hohlrad genutzt werden.

Um ausreichend große Leistungen zu erzielen, kann der Elektromotor und ein ggf. vorgesehenes Getriebe grundsätzlich die gesamte Baulänge des Arbeitskorpus bzw. die gesamte Länge dessen Innenraums ausnutzen.

Um eine zusätzliche Belastung des Arbeitskorpus selbst zu vermeiden bzw. weitgehend zu reduzieren, ist in Weiterbildung der Erfindung vorgesehen, dass der Elektromotor und/oder das damit verbundene Getriebe auf einer Drehachse des Arbeitskorpus abgestützt sind, mittels derer auch der Arbeitskorpus gelagert ist. Dies kann beispielsweise eine durchgehende Achse sein, auf der der Arbeitskorpus gelagert ist. Alternativ kann der Elektromotor jedoch auch auf einer einen Achsstummel bildenden Drehachse abgestützt sein, die nur einseitig an dem Arbeitskörper vorgesehen ist. Durch die Abstützung unmittelbar auf der Achse wird ein direkter Kraftfluss erzielt, der die Gewichts- und Lagerkräfte des Elektromotors direkt in die Lagerung des Arbeitskorpus ableitet und den Arbeitskorpus selbst nicht zusätzlich mit Kräften beaufschlagt.

Der Elektromotor zum Antreiben des jeweiligen Arbeitsaggregats kann grundsätzlich in verschiedener Art und Weise angesteuert werden. Regelmäßig kann hierzu eine Leistungselektronik mit einem Umrichter vorgesehen sein, der die benötigte Spannung bzw. Frequenz des Stroms umrichtet, um den Elektromotor entsprechend zu steuern. Die Leistungselektronik einschließlich des Umrichters kann hierbei grundsätzlich an verschiedener Stelle positioniert sein. Um das Anbaugerät unabhängig von einer bestimmten Schlepperausbildung betreiben zu können, ist es vorteilhaft, wenn zumindest der Umrichter anbaugeräteseitig vorgesehen ist. Grundsätzlich kann dabei auch die gesamte Leistungselektronik am Anbaugerät vorgesehen sein, so dass letztlich nur eine Stromleitung vom Schlepper her zur Energieversorgung benötigt wird.

In Weiterbildung der Erfindung kann hierbei die Leistungselektronik ebenfalls in das Innere des Arbeitskorpus integriert sein, in dem auch der Elektromotor selbst angeordnet ist. Hierdurch ist auch die Leistungselektronik vor äußeren Einwirkungen geschützt. Zudem vereinfacht sich die Verkabelung zwischen Leistungselektronik und Elektromotor.

Alternativ ist es jedoch ebenfalls möglich, die Leistungselektronik oder zumindest Teile hiervon am Schlepper anzuordnen. Insbesondere ist es auch möglich, den Umrichter des Schleppers zur Steuerung des elektrischen Antriebs am Anbaugerät zu nutzen, wobei hier der Umrichter des Schleppers über ein geeignetes elektrisches Gerät mit dem Elektromotor am Anbaugerät gekoppelt wird. In diesem Fall kann auf eine Leistungselektronik und/oder einen Umrichter am Anbaugerät selbst verzichtet werden. Vorteilhafterweise ist jedoch dennoch auch am Anbaugerät eine Leistungselektronik einschließlich Umrichter vorgesehen, um eine Betreibbarkeit des Anbaugeräts unabhängig von einer bestimmten Schlepperausbildung zu erreichen.

Grundsätzlich kann der elektrische Antrieb in verschiedene Arbeitsaggregate integriert werden. Besondere Vorteile ergeben sich hierbei dann, wenn der Ladewagen eine Dosierwalze zum Entladen des Ernteguts aus dem Erntegutspeicher aufweist, wobei der elektrische Antrieb umfassend einen Elektromotor und ein diesem ggf. zugeordnetes Getriebe in den Arbeitskorpus der Dosierwalze zum Antreiben dieses Arbeitsaggregats integriert sein kann.

Die vorliegende Erfindung wird nachfolgend anhand bevorzugter Ausführungsbeispiele und zugehöriger Zeichnungen näher erläutert. In den Zeichnungen zeigen:
- Fig. 1:: eine schematische Seitenansicht eines Ladewagens, der heckseitig an einen Schlepper angebaut ist, wobei der Schlepper frontseitig ein Mähwerk trägt,
- Fig. 2:: eine schematische Schnittansicht eines rotatorisch antreibbaren Arbeitskorpus eines Arbeitsaggregats des Ladewagens aus Fig. 1, wobei im Inneren des genannten Arbeitskorpus ein Elektromotor sowie eine Getriebestufe zum Antreiben des Arbeitsaggregats angeordnet ist,

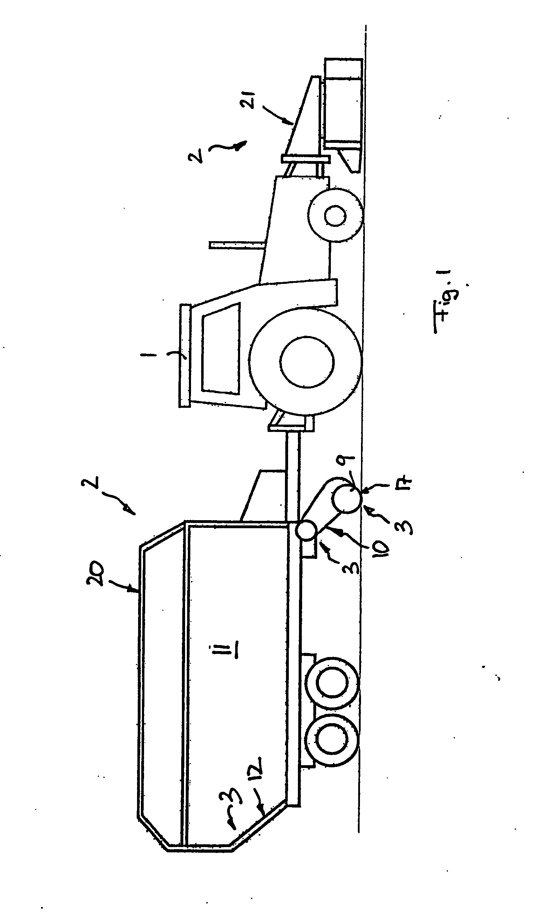

An den in Fig. 1 gezeigten Schlepper 1 sind zwei Anbaugeräte angebaut, die einmal in Form eines Ladewagens 20 und im anderen Fall als frontangebautes Mähwerk 21 ausgebildet sind.

Der in Fig. 1 gezeigte Ladewagen 20 umfasst hierbei mehrere Arbeitsaggregate 3, die jeweils einen drehbar gelagerten Arbeitskorpus 4 umfassen. Ein erstes Arbeitsaggregat 3 bildet hierbei die Pickup 17 umfassend eine Stachelwalze 9 zum Aufsammeln von Erntegut vom Boden. Die Stachelwalze 9, die um eine liegende Querachse drehbar gelagert ist, wird hierbei rotatorisch angetrieben, um am Boden liegendes Erntegut in einen Förderkanal zu fördern. Die genannte Stachelwalze 9 kann in Weiterbildung der Erfindung einen rohrförmigen Arbeitskorpus 4 umfassen, von dessen Umfang stachelförmige Mitnehmerzinken abstehen.

Ein weiteres Arbeitsaggregat 3 ist ein Förderer umfassend einen Förderrotor 10, der das von der Pickup 17 aufgenommene Erntegut übernimmt und in den Erntegutspeicher 11 des Ladewagens 20 fördert. Auch der Förderrotor 10 kann in Weiterbildung der Erfindung einen rohrförmigen Arbeitskorpus 4 umfassen, von dessen Umfang Rotorzinken abstehen, die das Erntegut fördern.

Ein weiteres Arbeitsaggregat des Ladewagens 20 kann eine heckseitig angebrachte Dosiervorrichtung mit mindestens einer, vorzugsweise mehrere Dosierwalzen 12, die heckseitig das Erntegut aus dem Erntegutspeicher 11 dosiert abladen. Die genannten Dosierwalzen 12 können in Weiterbildung der Erfindung ebenfalls rohrförmig ausgebildete Arbeitskorpi 4 umfassen, von denen Dosierzinken abstehen.

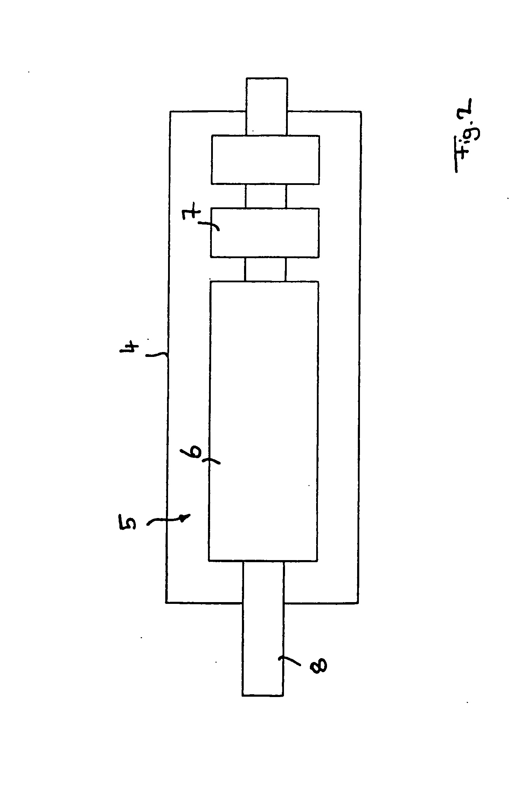

Um die genannten Arbeitskörper 4 der Arbeitsaggregate anzutreiben, sitzt jeweils im Inneren des jeweiligen Arbeitskorpus 4 ein Elektromotor 6, wie dies Fig. 2 zeigt. Der Elektromotor 6 ist hierbei vollständig im Inneren des jeweiligen Arbeitskorpus 4 aufgenommen und von dem rohr- bzw. walzenförmigen Arbeitskorpus 4 umfangsseitig vollständig umschlossen. Wie Fig. 2 zeigt, sitzt der Elektromotor 6 unmittelbar auf der Achse 8 des rohrförmigen Arbeitskorpus 4, die auch den genannten Arbeitskorpus 4 abstützt und drehbar lagert.

Wie Fig. 2 zeigt, kann der Elektromotor 6 mit einem Getriebe 7 beispielsweise in Form eines zweistufigen Planetengetriebes verbunden sein, das vorteilhafterweise ebenfalls auf der genannten Achse 8 abgestützt ist und in Weiterbildung der Erfindung ebenfalls im Inneren des Arbeitskorpus 4 aufgenommen ist.

Wie Fig. 2 zeigt, ist auch das Getriebe 7 vorteilhafterweise vollständig im Inneren des Arbeitskorpus 4 aufgenommen und von diesem umfangsseitig vollständig umschlossen.

Wie Fig. 2 zeigt, können der Elektromotor 6 und das Getriebe 7 im Wesentlichen die vollständige axiale Länge des Arbeitskorpus 4 ausfüllen, wobei vorzugsweise der Elektromotor 6 sich über eine größere Länge erstreckt als das Getriebe 7, so dass der Elektromotor 6 eine hohe Leistungsfähigkeit haben kann.

## Patentansprüche

1. Ladewagen zum Anbau an einen Schlepper (1), mit einer Pickup mit einer Stachelwalze (9) zum Aufnehmen von Erntegut vom Boden und einem Förderrotor (10) zum Weiterfördern des von der Pickup aufgenommenen Ernteguts in einen Erntegutspeicher (11), wobei der Arbeitskorpus (4) der Stachelwalze (9) und der Arbeitskorpus (4) des Förderrotors (10) jeweils von einem Antrieb (5) rotatorisch antreibbar ist, **dadurch gekennzeichnet, dass** der Antrieb (5) der Stachelwalze (9) der Pickup einen Elektromotor (6) aufweist, der im Inneren der Stachelwalze (9) aufgenommen ist, und der Antrieb des Förderrotors (10) einen Elektromotor (6) aufweist, der im Inneren des Förderrotors (10) aufgenommen ist.

2. Ladewagen nach dem vorhergehenden Anspruch, wobei der Arbeitskorpus (4) der Stachelwalze (9) und der Arbeitskorpus (4) des Förderrotors (10) jeweils einen länglichen Hohlkörper aufweisen, der den Elektromotor (6) umschließt.

3. Ladewagen nach dem vorhergehenden Anspruch, wobei der längliche Hohlkörper ein Rohr oder eine Walze bildet.

4. Ladewagen nach einem der vorhergehenden Ansprüche, wobei der Arbeitskorpus (4) ein Gehäuse für den Elektromotor (6) bildet, der selbst ohne eigenes Motorgehäuse ausgebildet ist.

5. Ladewagen nach einem der vorhergehenden Ansprüche, wobei dem Elektromotor (6) ein Getriebe (7), vorzugsweise in Form eines Planetengetriebes, zugeordnet ist, das ebenfalls im Inneren des Arbeitskorpus (4) aufgenommen ist.

6. Ladewagen nach dem vorhergehenden Anspruch, wobei eine Innenmantelfläche des Arbeitskorpus (4) eine Getriebelauffläche bildet und/oder eine mit einem Getrieberad kämmende Verzahnung aufweist.

7. Landwirtschaftlichen Anbaugerät nach einem der vorhergehenden Ansprüche, wobei der Elektromotor (6) ggf. zusammen mit einem daran angeschlossenen Getriebe mehr als zwei Drittel, vorzugsweise im Wesentlichen die gesamte Länge des Arbeitskorpus (4) ausfüllt.

8. Ladewagen nach einem der vorhergehenden Ansprüche, wobei der Elektromotor (6) und/oder ein damit verbundenes Getriebe (7) auf einer Drehachse (8) des Arbeitskorpus (4) abgestützt sind, mittels derer auch der Arbeitskorpus (4) an einem Maschinenrahmen oder einem anderen Haltebeschlag gelagert ist.

9. Ladewagen nach einem der vorhergehenden Ansprüche, wobei eine Leistungselektronik umfassend einen Umrichter zur Ansteuerung des Elektromotors (6) vorgesehen ist.

10. Ladewagen nach dem vorhergehenden Anspruch, wobei die Leistungselektronik ebenfalls im Inneren des Arbeitskorpus aufgenommen ist.

11. Ladewagen nach einem der vorhergehenden Ansprüche, wobei eine Dosierwalze (12) zum Entladen des Ernteguts aus dem Erntegutspeicher (11) vorgesehen ist und ein Elektromotor (6) in den Arbeitskorpus (4) der Dosierwalze (12) integriert ist.

## Claims

1. A self-loading wagon for attaching to a tractor (1), having a pick-up with a spiked roller (9) for taking up harvest from the ground and a conveyor rotor (10) for conveying the harvest taken up by the pick-up into a harvest store (11), with the working body (4) of the spiked roller (9) and the working body (4) of the conveyor rotor (10) each being rotatably drivable by a drive (5), **characterised in that** the drive (5) of the spiked roller (9) of the pick-up has an electric motor (6) which is received in the interior of the spiked roller (9) and the drive of the conveyor rotor (10) has an electric motor (6) which is received in the interior of the conveyor rotor (10).

2. A self-loading wagon in accordance with the preceding claim, wherein the working body (4) of the spiked roller (9) and the working body (4) of the conveyor rotor (10) each have an elongate hollow body which surrounds the electric motor (6).

3. A self-loading wagon in accordance with the preceding claim, wherein the elongate hollow body forms a tube or a roller.

4. A self-loading wagon in accordance with one of the preceding claims, wherein the working body (4) forms a housing for the electric motor (6) which is itself formed without a separate motor housing.

5. A self-loading wagon in accordance with one of the preceding claims, wherein a transmission (7), preferably in the form of a planetary transmission, is associated with the electric motor (6) and is likewise received in the interior of the working body (4).

6. A self-loading wagon in accordance with the preceding claim, wherein an inner jacket surface of the working body (4) forms a transmission running surface and/or has a toothed arrangement meshing with a transmission gear.

7. An agricultural attachment item in accordance with one of the preceding claims, wherein the electric motor (6), optionally together with a transmission connected thereto, takes up more than two thirds of the length, preferably substantially the total length, of the working body (4).

8. A self-loading wagon in accordance with one of the preceding claims, wherein the electric motor (6) and/or a transmission (7) connected thereto is/are supported on a rotational axle (8) of the working body (4), by means of which rotational axle the working body (4) is also supported at a machine frame or at another holding fitting.

9. A self-loading wagon in accordance with one of the preceding claims, wherein a power electronics unit is provided comprising an inverter for controlling the electric motor (6).

10. A self-loading wagon in accordance with the preceding claim, wherein the power electronics unit is also received in the interior of the working body.

11. A self-loading wagon in accordance with one of the preceding claims, wherein a doctor roller (12) is provided for unloading the harvest from the harvest store (11) and an electric motor (6) is integrated into the working body (4) of the doctor roller (12).

## Revendications

1. Véhicule de chargement destiné à être attelé à un tracteur (1), comportant un dispositif de ramassage muni d'un cylindre à dents (9) destiné à ramasser sur le sol les produits récoltés, et d'un rotor de convoyage (10) pour convoyer dans une cuve de stockage (11) les produits de récolte ramassés par le dispositif de ramassage, le corps de travail (4) du cylindre à dents (9) et le corps de travail (4) du rotor de convoyage (10) pouvant être entraînés en rotation chacun par un système d'entraînement (5), **caractérisé en ce que** le système d'entraînement (5) du cylindre à dents (9) du dispositif de ramassage comporte un moteur électrique (6) logé à l'intérieur du cylindre à dents (9), et le système d'entraînement du rotor de convoyage (10) comporte un moteur électrique (6) logé à l'intérieur du rotor de convoyage (10).

2. Véhicule de chargement selon la revendication précédente, dans lequel le corps de travail (4) du cylindre à dents (9) et le corps de travail (4) du rotor de convoyage (10) comportent chacun un corps creux allongé qui entoure le moteur électrique (6).

3. Véhicule de chargement selon la revendication précédente, dans lequel le corps creux allongé forme un tube ou un cylindre.

4. Véhicule de chargement selon l'une quelconque des revendications précédentes, dans lequel le corps de travail (4) forme un carter pour le moteur électrique (6) qui est réalisé lui-même sans son propre carter.

5. Véhicule de chargement selon l'une quelconque des revendications précédentes, dans lequel un engrenage (7), de préférence sous la forme d'un engrenage planétaire, est associé au moteur électrique (6) et est logé également à l'intérieur du corps de travail (4).

6. Véhicule de chargement selon la revendication précédente, dans lequel une paroi latérale intérieure du corps de travail (4) forme une surface de roulement de l'engrenage et/ou comporte une denture engrenant avec une roue de l'engrenage.

7. Outil agricole porté selon l'une quelconque des revendications précédentes, dans lequel le moteur électrique (6), le cas échéant conjointement avec un engrenage relié à celui-ci, remplit plus des deux tiers, de préférence sensiblement toute la longueur du corps de travail (4).

8. Véhicule de chargement selon l'une quelconque des revendications précédentes, dans lequel le moteur électrique (6) et/ou un engrenage (7) relié à celui-ci sont mis en appui sur un axe de rotation (8) du corps de travail (4), au moyen duquel le corps de travail (4) est également monté sur un bâti de machine ou une autre pièce de retenue.

9. Véhicule de chargement selon l'une quelconque des revendications précédentes, dans lequel il est prévu une électronique de puissance comportant un convertisseur pour commander le moteur électrique (6).

10. Véhicule de chargement selon la revendication précédente, dans lequel l'électronique de puissance est également logée à l'intérieur du corps de travail.

11. Véhicule de chargement selon l'une quelconque des revendications précédentes, dans lequel il est prévu un cylindre de dosage (12) pour décharger la récolte hors de la cuve de stockage (11) et un moteur électrique (6) est intégré dans le corps de travail (4) dudit cylindre de dosage (12).
